# EUROPEAN PATENT APPLICATION

(11) **EP 2 234 338 A1**
(43) Date of publication of application: **29.09.2010**
(21) Application number: 09156518.4
(22) Date of filing: 27.03.2009
(51) Int. Cl.: H04L 12/28

(54) **Communication system and method**

(71) Applicant: Dublin Institute of Technology, Dublin 6 (IE)
(72) Inventor: Dalton, John, Co. Dublin (IE)
(74) Representative: Lucey, Michael

(57) **Abstract**

The present invention provides a communication network, suitable for a home or office environment, comprising a master control node, comprising a PLC sub-network master node and a WLAN sub-network master node; a plurality of slave nodes, each slave node comprising a PLC sub-network slave node and a WLAN sub-network slave node. A number of advantages is achieved by tightly integrating Power Line Carrier (PLC) and Wireless Local Area Network (WLAN) network technologies to realize an optimum communication method. The proposed system, tightly integrating the two technologies, PLC and WLAN, overcomes many of the problems in the art. The invention exploits the complementarity of PLC and WLAN technologies to provide a greater whole-house coverage at a given throughput than would be possible with a single-technology implementation. Also, throughput capacity is on average almost doubled in comparison with a single-technology system.

## Description

### Field of the Invention

This invention relates to a communication system and method. In particular the invention relates to an integrated Home Area Network (HAN) for whole-home AudioVisual (AV) distribution.

### Background to the Invention

With the advent of new services to the home, for example IPTV, gaming and media servers that integrate DVDs/PVRs and "traditional" DVB TV feeds, distribution of AV streams throughout the home becomes a critical requirement. The problem with existing systems is how to do this with acceptable Quality of User Experience (QoE), least disruption and cost effectively. Retrofitting structured cabling does not satisfy this requirement.

Although market forecasts point to an explosion of in-home multimedia distribution in the near future, the uptake to-date has been quite small. One of the principal inhibitors to widespread adoption is the prohibitive cost and disruptive nature of new communications wiring installations in existing homes. This is not an issue for some few new houses where structured wiring is installed at the construction stage. However, the vast majority of homes are existing ones with little or no communications wiring. The Industry consensus is that the solution must involve "no new wiring". Other approaches are to utilise the existing telephone and TV coaxial cabling throughout the house. However, this is confined mostly to the US market, where such cabling is more widespread than in Europe and the rest of the world.

The two alternatives for best "no new wires" whole-home coverage are Power Line Communications (PLC), using the electrical wiring within the building and Wireless Local Area Network (WLAN), using unlicensed RF spectrum. Ultra-Wideband (UWB) and 60Ghz RF links are also being researched. Both, however, are targeted at very short range applications, typically within a room.

All proposed "no new wires" solutions are a compromise between throughput of data and percentage of whole-house coverage. Ubiquity of high-speed (ca. 100 Mbps) availability throughout the building is the goal. Neither of the two leading contender technologies, WLAN and PLC, can achieve this. The in-building environment is by no means standard with unpredictable dynamically varying interference profiles along with great variability in both RF and Powerline path characteristics. WLAN, like all RF systems using unlicensed bands, is susceptible to interference. Path loss caused by obstructions is also a problem. Powerline Communications (PLC) is now evolving as a strong contender with throughput comparable to the latest WLAN draft 802.11n standard. It is, however, also susceptible to interference from electrical appliances, impaired wiring along with high signal attenuation over distance.

Both of these latter technologies are capable on their own of providing a limited service, even in the presence of interference. Neither, however, is capable of meeting the home users QoE requirements for distribution of multiple AV streams throughout the building.

As this type of system is addressing the consumer market, cost-effectiveness is of major importance. This is the norm in consumer electronics. This requires that the system be capable of installation by the end user and hence will in most cases be non-ideal in regard to location of nodes.

Products beginning to appear in the marketplace incorporate both a PLC link and a WLAN link. These, however, are in the form of conventional layer three routers and bridges. A traffic stream arriving at one of these routers via Ethernet is predestined to be transmitted on one or the other of the two links irrespective of channel quality and loading. The bridges are typically used as WLAN extenders via PLC, thus obviating the need for Ethernet cabling between Access points.

A number of published patents that relate to a communications system and method using both wireless and PLC bearers relating to bridging (WLAN extender) and as a fail-over redundant mechanism are known in the art. An example of such a system and method is PCT publication number WO 2008/030245 which performs switching between bearers when one channel fails for critical applications requiring fail-over redundancy. Other patents relate to switching data traffic solely on the basis of transmission line signal quality rather than the combination of network traffic loading and quality of the two sub-networks. An example of such a system and method is PCT publication number WO 2007/083827.

There is therefore a need to provide a communication system and method to overcome the abovementioned problems.

### Summary of the Invention

According to the invention there is provided, as set out in the appended claims, a communication system or network comprising:
a master control node comprising a PLC sub-network master node, a WLAN sub-network master node, a master controller, a frame router and a Network Quality Database (NQD);
a plurality of slave nodes; each slave node is comprised of a PLC sub-network slave node, a WLAN sub-network slave node, a controller and a frame router, whereby,
AV streams of data can be switched in real-time between WLAN and PLC sub-networks depending on network traffic demand and link quality conditions of the individual sub-networks.

The present invention provides a number of advantages over existing solutions by tightly integrating Power Line Carrier (PLC) and Wireless Local Area Network (WLAN) network technologies to realize an optimum communication method. The proposed system, integrating the two technologies PLC and WLAN, overcomes many of the problems mentioned above. The invention exploits the complementarity of PLC and WLAN technologies provides a greater whole-house coverage at a given throughput than would be possible with a single-technology implementation. Also, throughput capacity is on average almost doubled in comparison with a single-technology system.

The present invention, tightly combining both technologies, provides a seamless combined throughput almost equal to the sum of the two. The system and method dynamically switches traffic streams between the two sub-networks to mitigate/cancel the effects of interference and optimise traffic loading. The invention also provides greater flexibility to the user vis-à-vis dedicated communications wiring solutions as a person can locate a CPE, e.g. TV set top box, wherever a power socket is available or indeed anywhere in the coverage area in the case of battery-operated CPEs, e.g. Laptop. As the two sub-networks in the integrated solution of the invention are fully standards compliant, e.g. HomeplugAV and IEEE802.11n, other vendors' single-bearer products can also work seamlessly with our proposed solution.

In one embodiment the master controller is associated with a dynamic Network Quality Database (NQD).

In one embodiment the sub-networks share a common MAC address at each node. The PLC and WLAN sub-networks also share common MAC control plane functions of Connection and Admission Control, traffic load balancing, along with frame routing that greatly improves the performance of the system

In one embodiment the sub-networks share a common MAC address at each node. The PLC and WLAN can be integrated at a MAC layer that greatly improves the performance of the system.

In one embodiment the controller comprises means for either or both sub-networks to operate in sleep mode, thus reducing power consumption.

In one embodiment the network resources are allocated based on Time Division Multiple Access (TDMA) at the MAC layer in each sub-network, the allocation of time-slots based on QOS requirements.

In one embodiment the network comprises means for using unallocated time-slots as a measure of traffic loading on that sub-network.

In one embodiment the master controller controls a protocol to provide a calculation of link quality between the master node and a slave node.

In one embodiment a PLC protocol uses Channel Estimation Frames (CEF) that are sent to said master node from the slave node to calculate link quality of master to slave nodes links and also slave to slave nodes links.

In one embodiment a WLAN protocol uses beacon frames and/or beacon responses that are sent to said master node from the slave node to calculate link quality of master to slave nodes links and also slave to slave nodes links.

In one embodiment a client requests a new AV stream, the QOS requirements are sent to the controller located in the master node that runs a connection admission protocol, said controller comprises means for deciding which of the two sub-networks should be used to deliver the AV stream. If the controller determines that neither of the two sub-networks can deliver the said AV stream while maintaining the required QOS, then the said controller refuses the AV stream request.

In one embodiment where the quality of an existing AV stream becomes unacceptable due to sub-network link quality deterioration and QOS can no longer be maintained, said controller attempts to re-allocate traffic between the two sub-networks for the purpose of re-establishing QOS of the said AV stream. If re-establishment of QOS is not possible via this procedure, the said impaired existing AV stream remains unchanged.

In one embodiment if an AV stream cannot be wholly accommodated by either of the two sub-networks, the AV stream may be split across the two sub-networks, the proportion of the AV stream packets being carried on each sub-network being determined by the master controller.

In a further embodiment there is provided a method of controlling a communication system comprising the steps of:
providing a master control node, comprising a PLC sub-network master node and a WLAN sub-network master node;
providing a plurality of slave nodes, each slave node comprising a PLC sub-network slave node and a WLAN sub-network slave node; and
controlling the master node, whereby AV streams of data can be switched in real-time between WLAN and PLC sub-networks depending on network traffic demand and link quality conditions of the individual sub-networks.

There is also provided a computer program comprising program instructions for causing a computer program to carry out the above method that may be embodied on a record medium, carrier signal or read-only memory.

### Brief Description of the Drawings

The invention will be more clearly understood from the following description of an embodiment thereof, given by way of example only, with reference to the accompanying drawings, in which:-
Figure 1 is an illustrative diagram of the hybrid network according to one embodiment of the invention;
Figure 2 is a perspective view of a node's enclosure according to the invention;
Figure 3 is a block diagram of a hybrid Master node and a hybrid Slave node according to a further embodiment of the present invention;
Figures 4 and 5 are more detailed diagrams of the Master and Slave nodes respectively, showing the communications stacks of the PLC and WLAN sub-networks according to the present invention;
Figures 6 and 7 are block circuit diagrams of the Master and Slave nodes respectively according to the present invention;
Figure 8 is a flowchart illustrating operation of the invention;
Figure 9 is another flowchart illustrating the operation of another embodiment of the invention;
Figure 10 is a further flowchart showing another embodiment of the invention; and
Figure 11 is a flowchart showing a further embodiment of the invention.

### Detailed Description of the Drawings

The invention comprises of a highly integrated hybrid Home Area Network (HAN) architecture solution whereby AV streams can be switched seamlessly in real-time between WLAN and PLC sub-networks depending on network traffic demand and link quality conditions of the individual sub-networks. Background non-real-time traffic is also accommodated across the two sub-networks.

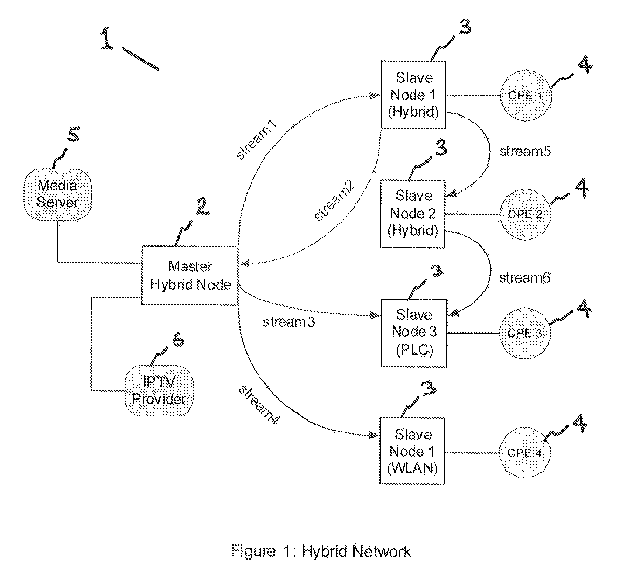

Figure 1 illustrates an overall diagram of the system according to the invention, illustrated generally by the reference numeral 1. A master control node 2 is in communication with a plurality of slave nodes 3 and is in control of the traffic assignment over both the PLC and WLAN sub-networks across the entire network. The master node 2 comprises a controller whereby AV streams of data can be switched seamlessly in real-time between WLAN and PLC sub-networks depending on network traffic demand and link quality conditions of the individual sub-networks. Each slave node 3 is typically associated with a Client or Customer Premises Equipment (CPE) 4, e.g. a TV receiver. The operation of the communication system and method is described in more detail below. Nodes may receive and/or transmit traffic over either or both sub-networks simultaneously. The master node can receive data from a plurality of sources, for example a media server 5and/or IPTV provider 6. Both sub-networks share a common MAC address at each node.

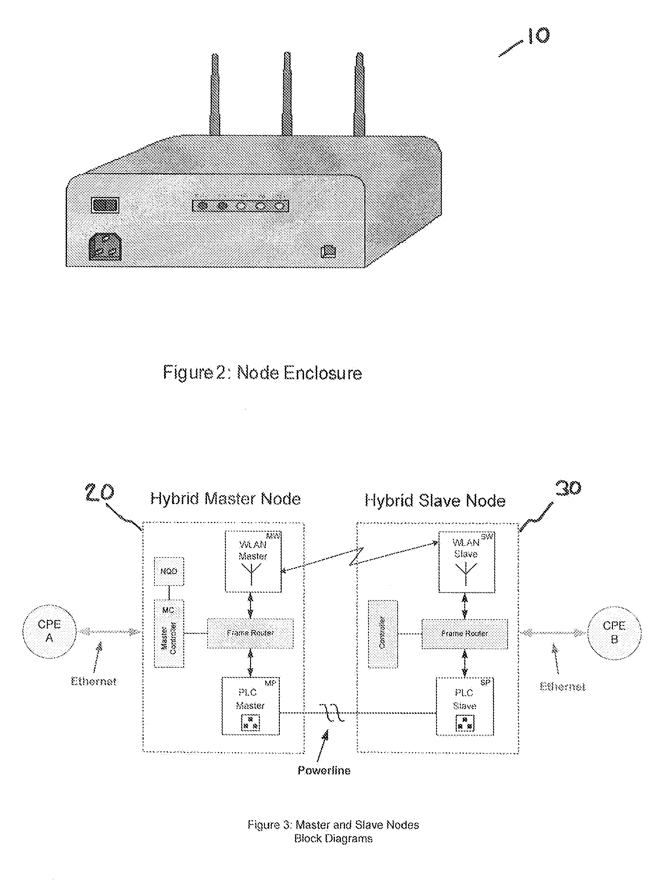

Figure 2 illustrates a perspective view of an enclosure for each node indicated generally by the reference numeral 10. The antennas, used for the WLAN sub-network, may be internal or external to the enclosure. The power line connector has the dual function of providing the AC power for the enclosed electronic circuitry and also providing the communications connection for the PLC sub-network. An RJ45 jack is provided to enable Ethernet communications with other communications-enabled apparatus. The binary displays, e.g. LEDs, provide status information. In another embodiment of the invention the circuitry may be incorporated in other electronic apparatus, e.g. a Set Top Box, thus dispensing with the requirement for a separate enclosure.

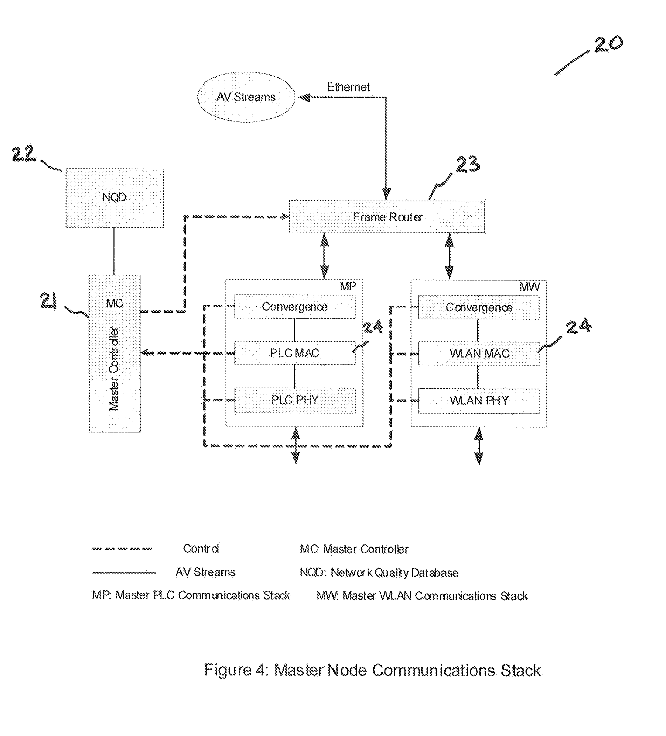

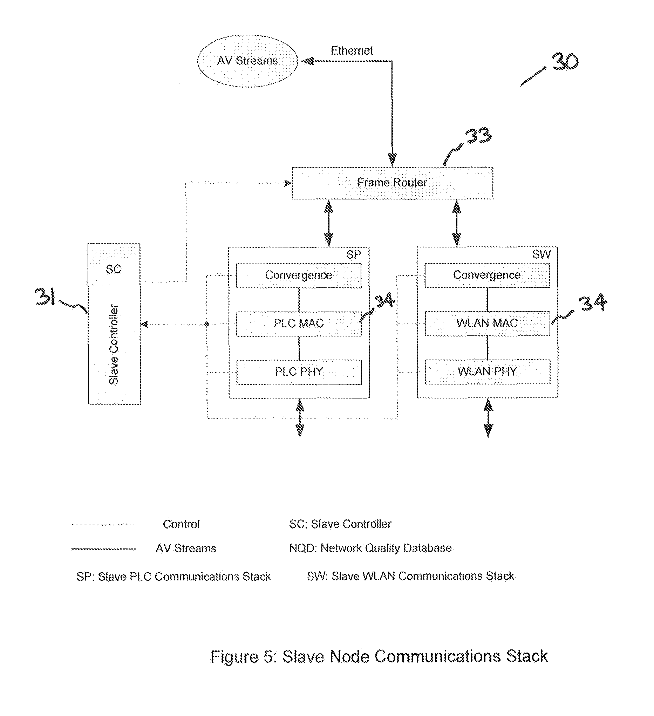

Figure 3 illustrates two generalized block diagrams of the hybrid Master node 20 and a hybrid slave node 30. Figures 4 and 5 give more detailed diagrams of the Master node 20 and a Slave node 30 respectively, showing the interconnections between the various elements and the communications layers constituting both the PLC and WLAN sub-networks. The communications stacks comprises three layers, Physical, MAC and Convergence, for each of the PLC and WLAN sub-networks. The communication layers can conform with Industry standards, e.g. HomePlugAV, UPA etc in the case of PLC and the IEEE802.g, IEEE802.11n (draft 2) etc standards in the case of WLAN. The Master 21 and Slave 31 controllers monitor activities and parameters within these layers to gain sub-network status and for QOS (Quality of Service) determination. The slave node 30 further comprises a frame router 33 and a PLC and WLAN MAC layer 34.

The Master Controller (MC) 21 comprises a software program that has overall control of the Network. It is located in the Master node 20 and communicates with the various Slave Controllers (SC) 31 via a control messaging protocol. Associated with the MC 21 is a dynamic Network Quality Database (NQD) 22 that contains parameters relating to Links quality and traffic loading for both sub-networks. The function of the Frame Router 23, a software program, is to route frames of the AV streams from the Ethernet port to the appropriate sub-network and also to sequence frames from the sub-networks to the Ethernet port. The Frame Router 23 is under the control of the MC 21.

In order to reduce power consumption, either or both sub-networks can be put into sleep mode. This is under the control of the MC program.

The MC 21 effects traffic management and optimizes load balancing across the two sub-networks along with updating the NQD 22. The MC 21 also runs an algorithm to decide which sub-network should be used for a particular AV stream. This algorithm is run under the following occurrences:
1. A request is received from a Client or Customer Premises Equipment (CPE) for a new AV stream.
2. Quality of an AV stream becomes unacceptable due to sub-network link quality deterioration and QOS can no longer be maintained.
3. Termination of an existing AV stream.

There are several parameters used by this algorithm to decide which sub-network should be used to transport a particular stream, for example network traffic loading and balance between sub-networks, individual link qualities for both sub-networks and QOS requirements of a particular stream. These parameters are maintained in the NQD 22.

For traffic with QOS specifications, the resource allocation is based on Time Division Multiple Access (TDMA) at a MAC layer 24 in the case of both sub-networks. Each sub-master allocates time-slots based on QOS requirements. The amount of unallocated time-slots can be used as a measure of traffic loading on that sub-network. This information is copied to the NQD 22.

An important aspect of the invention is protocols developed to control the operation to the invention. Protocols are running to assist in the calculation of link quality of both the PLC and WLAN sub-networks between a master 20 and a slave node 30. In PLC this can be done using Channel Estimation Frames (CEF). These CEFs are sent as often as the sub-master node deems necessary. In the WLAN protocol, beacon frames and beacon responses are sent to calculate link quality. Again, these can be sent as often as the sub-master deems necessary. All this link quality data is copied to the NQD database 22. The MC 21 may trigger the sub-masters to estimate link qualities using their respective protocols. By doing this, the MC 21 updates the relevant part of the NQD database on which it bases its decisions. When a CPE requests a new AV stream, the QOS requirements (in terms of minimum Bandwidth, Max Jitter and Max Latency) are inspected by the MC 21. The MC 21 then runs its algorithm to decide which sub-network should be used to transport the stream. The table in the NQD 22 used by the Frame Router 23 to determine which of the two sub-networks the frames of the new AV stream should be routed to is then updated. The new AV stream connection is now complete.

This is a protocol that is followed for any new AV stream including gaming and VOIP traffic. As part of the algorithm, developed for the present invention, the MC 21 may deem it necessary to switch one or more streams to the other sub-network in order to free up TDMA slots on that sub-network for a newly requested AV stream or to allow a sub-network to enter sleep mode, thus reducing power dissipation. With an intelligent switching algorithm in place, the utilisation of the throughput capacity of each sub-network can be optimised thus maximizing the capacity of the entire network leading to a traffic throughput rate approaching that of the sum of the two sub-networks.

The NQD 22 contains:
- A table of the MAC addresses of all the nodes associated with the network including any single-bearer slave nodes from other vendors.
- "Preferred" sub-network database for each hybrid node.
- Links quality database for each possible node link for each of the two sub-networks.
- Traffic loading and parameters for both sub-networks.

In general each slave node, because of, for example, location within the building or impairments in electrical wiring, has a "preferred" sub-network in the sense that on a non-time-varying basis one of the two sub-networks has a better link quality than the other.

It will be appreciated that various aspects of the network performance can be configured to adapt to different operating conditions.

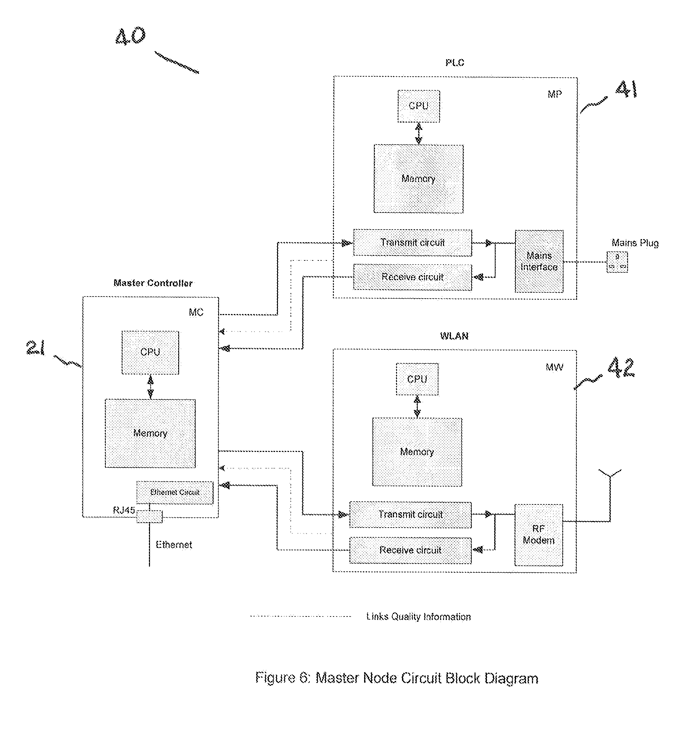

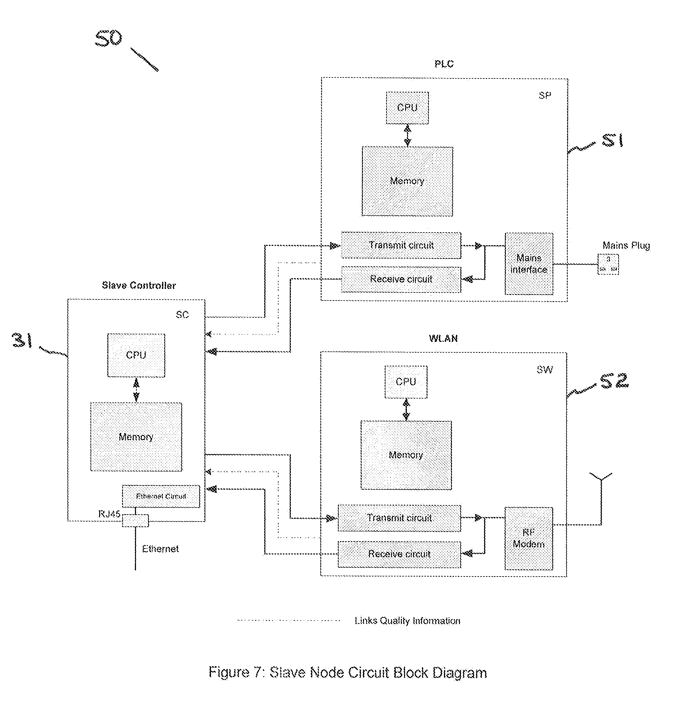

Figures 6 and 7 illustrates a Master node circuit block diagram 40 and a Slave node circuit block diagram 50 respectively. The circuit blocks, labelled MP 41and SP 51 for Master and Slave nodes respectively, are available as standard PLC chipsets. The CPU and associated memory circuit implements the MAC and Convergence layers. The CPU is typically a RISC microcontroller, e.g. ARM 7. The Transmit, Receive and Mains Interface circuits implement the Physical layer. The transmitter circuit accepts frames and converts them to PLC Physical format for transmission via the mains interface circuit to the mains wiring. The Mains interface circuit, incorporating an analog front End and the Line Coupler, connects directly to the Mains wiring. The receiver circuit accepts the PLC Physical formatted signals from the Mains interface and converts them to frame format.

Similarly for WLAN, the circuit blocks, labelled MW 42 and SW 52 for Master and Slave nodes respectively, are available as standard WLAN chipsets. The CPU and its associated memory circuit implements the MAC and Convergence layers. The CPU is typically a RISC microcontroller, e.g. ARM 7. The Transmit, Receive and RF modem circuits along with the antenna implement the Physical layer. The transmitter circuit accepts frames and converts them to WLAN Physical format for transmission via the RF modem circuit and associated antenna. The receiver circuit accepts the WLAN Physical formatted signals from the RF modem and converts them to frame format. The Master and Slave Controllers, MC and SC respectively, typically use a RISC microcontroller, e.g. ARM 7, as CPU and associated memory circuit to realise the Frame Routers, Control algorithms and, in the case of the MC only, the Network Quality Database (NQD). An Ethernet circuit and associated RJ45 connector are located in both controllers permits communication via Ethernet to and from the Nodes.

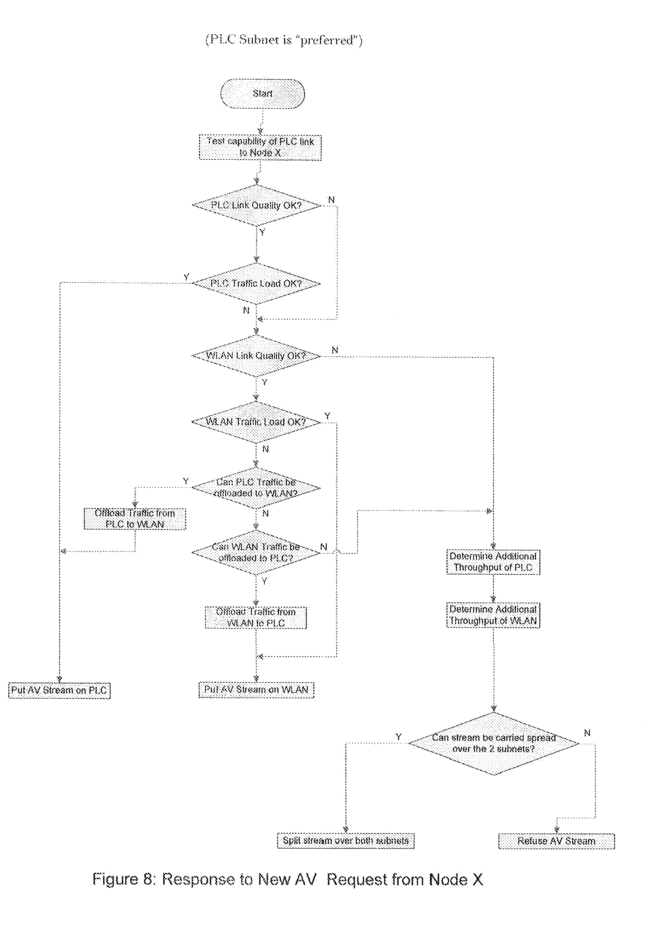

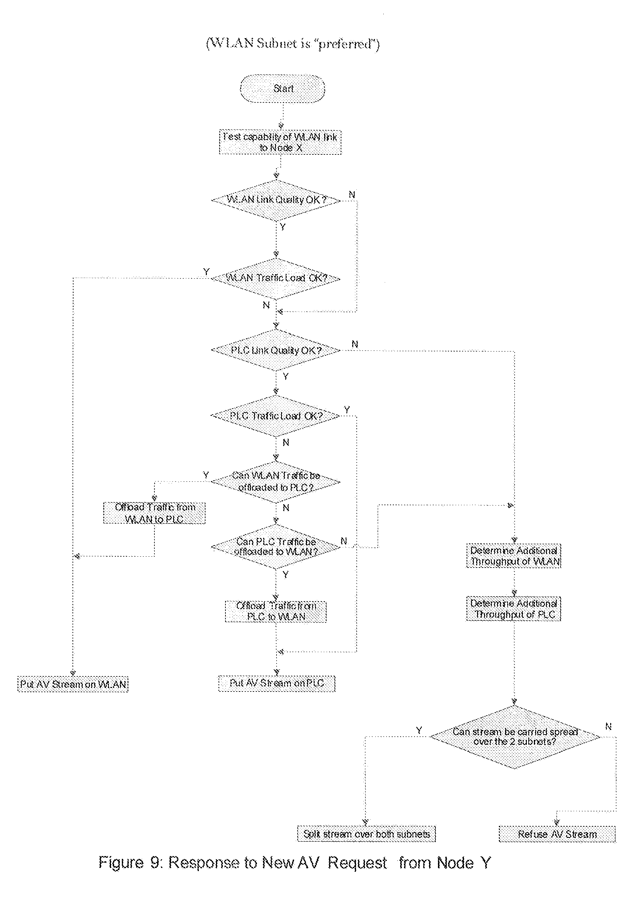

Figure 8 illustrates a flowchart of the response by the MC to a request for a new AV stream from a CPE at a hybrid Node whose preferred sub-network is PLC. Figure 9 gives same flowchart for a node whose preferred sub-network is WLAN.

On detection of a request, the sequence of response, with reference to Figure 8 is as follows:
Capability of the PLC sub-network to accommodate the requested stream is first tested.
If the PLC sub-network is adjudged to be capable, then stream is placed on the PLC sub-network.
If PLC sub-network is adjudged to be NOT capable, then capability of the WLAN sub-network to accommodate the requested stream is tested.
If WLAN sub-network is adjudged to be capable, then stream is placed on the WLAN sub-network.
If WLAN sub-network is adjudged to be NOT capable, then the possibilities of re-assigning the existing traffic between the two sub-networks so as to accommodate the requested stream are investigated.
If investigation shows that the PLC sub-network can accommodate the requested stream, after re-assignment of current traffic, then re-assignment of the identified current traffic from PLC sub-network to the WLAN sub-network is effected.
The requested stream is then placed on the PLC sub-network. If investigation shows that the WLAN sub-network can accommodate the requested stream, after re-assignment of current traffic, then re-assignment of the identified current traffic from the WLAN sub-network to the PLC sub-network is effected.
The requested stream is then placed on the WLAN sub-network.
If investigation shows that neither the PLC sub-network nor the WLAN sub-network can accommodate the requested stream on their own, after re-assignment of current traffic, then the possibility of splitting the requested stream across both sub-networks is investigated.
If this investigation reveals that splitting the requested stream across both sub-networks permits accommodation of the requested stream, then the packets of the requested stream are assigned across the two sub-networks in proportion to the relative capability of the two sub-networks to accommodate them.
If this investigation reveals that splitting the requested stream across both sub-networks does NOT permit accommodation of the requested stream, then the requested stream is refused.

On detection of a request, the sequence of response, with reference to Figure 9, is as follows:
Capability of the WLAN sub-network to accommodate the requested stream is first tested.
If WLAN sub-network is adjudged to be capable, then stream is placed on the WLAN sub-network.
If WLAN sub-network is adjudged to be NOT capable, then capability of the PLC sub-network to accommodate the requested stream is tested.
If PLC sub-network is adjudged to be capable, then stream is placed on the PLC sub-network.
If PLC sub-network is adjudged to be NOT capable, then the possibilities of re-assigning the existing traffic between the two sub-networks so as to accommodate the requested stream are investigated.
If investigation shows that the WLAN sub-network can accommodate the requested stream, after re-assignment of current traffic, then re-assignment of the identified current traffic from WLAN sub-network to the PLC sub-network is effected.
The requested stream is then placed on the WLAN sub-network.
If investigation shows that the PLC sub-network can accommodate the requested stream, after re-assignment of current traffic, then re-assignment of the identified current traffic from the PLC sub-network to the WLAN sub-network is effected. The requested stream is then placed on the PLC sub-network.
If investigation shows that neither the WLAN sub-network nor the PLC sub-network can accommodate the requested stream on their own, after re-assignment of current traffic, then the possibility of splitting the requested stream across both sub-networks is investigated.
If this investigation reveals that splitting the requested stream across both sub-networks permits accommodation of the requested stream, then the packets of the requested stream are assigned across the two sub-networks in proportion to the relative capability of the two sub-networks to accommodate them.
If this investigation reveals that splitting the requested stream across both sub-networks does NOT permit accommodation of the requested stream, then the requested stream is refused.

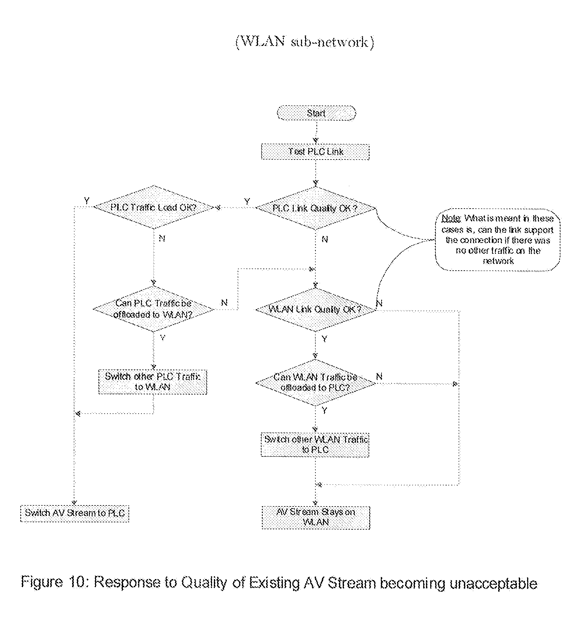

Figure 10 illustrates a flowchart showing response to Quality of an AV stream becoming unacceptable due to sub-network link quality deterioration and QOS can no longer be maintained, where the sub-network is a WLAN:
The PLC sub-network link is tested to determine if its link quality is such as to render it capable of accommodating the AV stream.
If yes, a determination is made of whether the PLC sub-network is capable of accommodating the AV stream along with the existing traffic.
If yes, the AV stream is switched to the PLC sub-network.
If no, a determination is made of whether the existing PLC traffic can be offloaded to the WLAN sub-network.
If yes, the existing PLC sub-network traffic is switched to the WLAN sub-network and the AV stream is switched to the PLC sub-network.
If it is ascertained that the PLC sub-network cannot accommodate the AV stream under any circumstances, then the WLAN sub-network link quality is examined to determine, if without other existing traffic, it could accommodate the AV stream.
If yes, a determination is made of whether the other existing WLAN traffic can be offloaded to the PLC sub-network.
If yes, the other existing WLAN sub-network traffic is switched to the PLC sub-network, leaving the AV stream on the WLAN sub-network.
If no, the AV stream is left on the WLAN sub-network.

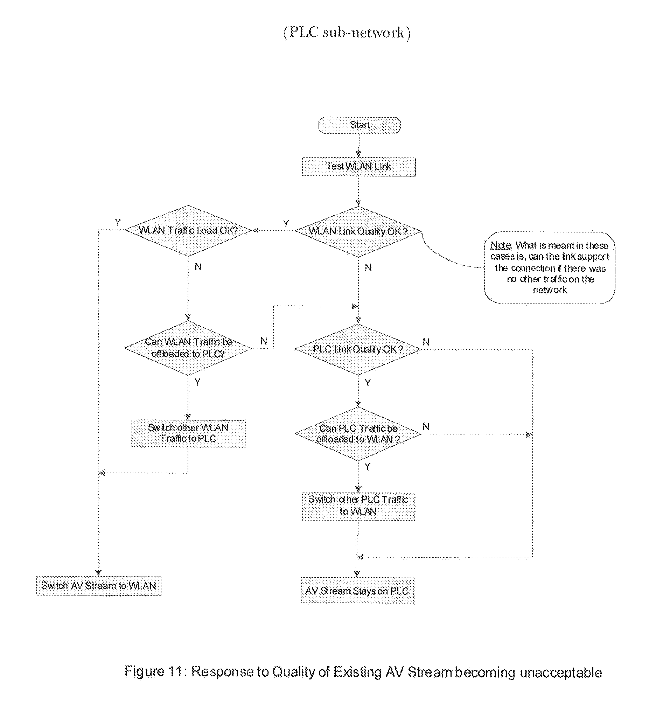

Figure 11 illustrates a flowchart showing response to Quality of an AV stream becoming unacceptable due to sub-network link quality deterioration and QOS can no longer be maintained, where the sub-network is PLC:
The WLAN sub-network link is tested to determine if its link quality is such as to render it capable of accommodating the AV stream.
If yes, a determination is made of whether the WLAN sub-network is capable of accommodating the AV stream along with the existing traffic.
If yes, the AV stream is switched to the WLAN sub-network. If no, a determination is made of whether the existing WLAN traffic can be offloaded to the PLC sub-network.
If yes, the existing WLAN sub-network traffic is switched to the PLC sub-network and the AV stream is switched to the WLAN sub-network.
If it is ascertained that the WLAN sub-network cannot accommodate the AV stream under any circumstances, then the PLC sub-network link quality is examined to determine, if without other existing traffic, it could accommodate the AV stream.
If yes, a determination is made of whether the other existing PLC traffic can be offloaded to the WLAN sub-network.
If yes, the other existing PLC sub-network traffic is switched to the WLAN sub-network, leaving the AV stream on the PLC sub-network. If no, the AV stream is left on the PLC sub-network.

It will be appreciated that in the context of the present invention that the term 'real time' means that streams of data can be switched seamlessly that is unnoticed by human perception and/or the switching of data is not visible to a user in operation.

The embodiments in the invention described with reference to the description drawings comprise a computer apparatus and/or processes performed in a computer apparatus in order to control the communications system as hereinbefore described. However, the invention also extends to computer programs, particularly computer programs stored on or in a carrier adapted to bring the invention into practice. The program may be in the form of source code, object code, or a code intermediate between source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal that may be transmitted via an electrical or an optical cable or by radio or other means.

The invention is not limited to the embodiments hereinbefore described but may be varied in both construction and detail.

## Claims

1. A communication network, suitable for a home or office environment, comprising:
a master control node, comprising a PLC sub-network master node and a WLAN sub-network master node;
a plurality of slave nodes, each slave node comprising a PLC sub-network slave node and a WLAN sub-network slave node; and
said master node comprising a controller whereby AV streams of data can be switched in real-time between WLAN and PLC sub-networks depending on network traffic demand and link quality conditions of the individual sub-networks.

2. The communication network of claim 1 wherein the controller is associated with a dynamic Network Quality Database (NQD).

3. The communication network as claimed in any preceding claim wherein said plurality of nodes comprises means for receiving and/or transmitting traffic over either or both sub-networks simultaneously.

4. The communication network as claimed in any preceding claim wherein said sub-networks share a common MAC address at each node.

5. The communication network as claimed in any preceding claim wherein said controller comprises means for either or both sub-networks to operate in sleep mode.

6. The communication network as claimed in any preceding claim wherein network resources are allocated based on Time Division Multiple Access (TDMA) at a MAC layer in each sub-network and allocates time-slots based on QOS requirements.

7. The communication network as claimed in claim 6 wherein the network comprises means for using unallocated time-slots as a measure of traffic loading on that sub-network.

8. The communication network as claimed in any preceding claim wherein said controller controls a protocol to provide a calculation of link quality of an AV stream between the master node and a slave node.

9. The communication network as claimed in claim 8 wherein a PLC protocol uses Channel Estimation Frames (CEF) and are sent to said master node from the slave node to calculate link quality of said AV streams.

10. The communication network as claimed in claim 8 or 9 wherein a WLAN protocol uses beacon frames and beacon responses and are sent to said master node from the slave node to calculate link quality of the AV streams.

11. The communication system as claimed in any preceding claim wherein a client requests a new AV stream, the QOS requirements are sent to the master controller that runs a connection admission protocol, said controller comprises means for deciding which sub-network should be used to deliver the AV stream.

12. The communication system as claimed in any preceding claim wherein the quality of an existing AV stream becomes unacceptable due to sub-network link quality deterioration and QOS can no longer be maintained, said controller comprises means to reallocate traffic between the two sub-networks for the purpose of re-establishing QOS of the said AV stream.

13. The communication system as claimed in any preceding claim wherein if an AV stream cannot be wholly accommodated by either of the two sub-networks, the AV stream may be split across the two sub-networks, the proportion of the AV stream packets being carried on each sub-network being determined by the master controller.

14. A method of controlling a communication system comprising the steps of:
providing a master control node, comprising a PLC sub-network master node and a WLAN sub-network master node;
providing a plurality of slave nodes, each slave node comprising a PLC sub-network slave node and a WLAN sub-network slave node; and
controlling the master node, whereby AV streams of data can be switched in real-time between WLAN and PLC sub-networks depending on network traffic demand and link quality conditions of the individual sub-networks.

15. A computer program comprising program instructions for causing a computer to perform the method of claim 14.
